# FASCICULE DE BREVET EUROPEEN

(11) **EP 0 821 204 B1**
(45) Date de publication et mention de la délivrance du brevet: **04.06.2003**
(21) Numéro de dépôt: 97401590.1
(22) Date de dépôt: 03.07.1997
(51) Int. Cl.: F24F 11/02, B61D 27/00

(54) **Dispositif et procédé de régulation de la pression interne d'un espace clos ventilé**
Verfahren und Vorrichtung zur Druckregelung von einem belüfteten Raum
Process and device for the internal pressure control of a ventilated enclosure

(30) Priorité: 23.07.1996 FR 9609210
(43) Date de publication de la demande: 28.01.1998
(73) Titulaire: GEC ALSTHOM TRANSPORT SA, 75116 Paris (FR)
(72) Inventeur: Mariaux, Gille, 87700 Beynac (FR); Guinot, Alain, 17200 St Rogatien (FR); Mineaud, Gérard, 17180 Perigny (FR); Andre, Pierre, 17220 Salles sur Mer (FR); Gervais, Yves, 86000 Poitiers (FR)
(74) Mandataire: Gosse, Michel

(56) Documents cités:
- EP-A- 0 700 818
- WO-A-92/08082
- US-A- 4 428 529
- US-A- 4 741 257

## Description

La présente invention concerne les dispositifs de régulation de la pression de volumes, en mouvement ou non, possédant une étanchéité relative et nécessitant un renouvellement de l'air, en général, et porte, plus particulièrement, sur un dispositif et un procédé de régulation de la pression interne d'un espace clos ventilé soumis à des variations de la pression extérieure.

Pour rappel, le terme régulation signifie maintien de la grandeur physique à réguler à une valeur constante prédéterminée.

Le dispositif de la présente invention est susceptible de s'appliquer à deux catégories différentes de matériel.

Une première catégorie concerne la régulation de la pression interne à tout véhicule ventilé en mouvement soumis à des variations de la pression extérieure consécutive par exemple à des modifications rapides de son champ aérodynamique ou à des variations d'altitude.

A titre d'exemple on peut citer les trains à grande vitesse. Le document EP-A-0 700 818 décrit un système de protection contre la surpression dans un train.

Dans cette première catégorie de matériel, les variations de pression, sans régulation, entraîneraient une gène physiologique à l'usager.

Une seconde catégorie concerne, de manière générale, tout volume ventilé en communication avec une pression extérieure variable.

Dans le cas d'un véhicule ou d'un volume pour lequel le renouvellement de l'air interne est effectué par climatisation ou ventilation à partir de l'air extérieur, la pression interne est voisine de la pression externe.

Les variations de pression externes se répercutent presque instantanément à l'intérieur du volume en raison des dimensions des sections des circuits de ventilation. La constante de temps des transmissions des variations de pression à l'intérieur des véhicules climatisés ou ventilés est donc souvent petite, en raison même des caractéristiques des circuits de ventilation.

A titre d'exemple, on sait que lorsqu'un véhicule en mouvement dans l'atmosphère passe à proximité d'un obstacle (entrée d'un tunnel, pont, objets divers au voisinage de la voie de circulation,...) ou lors du croisement d'un autre véhicule, il se produit une déformation du champ des vitesses aérodynamiques que le véhicule convecte avec lui.

Il résulte d'un tel phénomène des variations rapides de pression sur les parois externes du véhicule.

Cet effet est d'autant plus prononcé que la vitesse du véhicule est plus élevée, les pressions étant approximativement proportionnelles au carré de la vitesse.

En particulier, lors de l'entrée des trains à grande vitesse dans les tunnels ou les tranchées, des variations rapides de pression se produisent sur la paroi externe des voitures. Ces variations brutales se propagent dans l'espace confiné constitué par le tunnel ou la tranchée, et sont connues sous la terminologie "d'ondes de pression".

Par ailleurs ces ondes de pression, qui se propagent dans l'espace confiné extérieur, se réfléchissent à ses extrémités, créant ainsi des ondes de pression de retour aussi importantes que les ondes directes.

Ces variations se répercutent rapidement à l'intérieur des véhicules principalement par les circuits de ventilation ou de climatisation, causant une gène importante aux voyageurs.

Il est ainsi courant de subir des variations de pression pouvant atteindre 2000 Pascals en moins d'une seconde.

L'invention est également susceptible de s'appliquer à tout volume ventilé par l'intermédiaire d'un circuit d'alimentation et d'un circuit d'extraction d'air en contact avec la pression extérieure, que ce volume ait des fuites ou non.

A titre d'exemple de communication du volume avec l'extérieur autre que les circuits précédemment définis, on peut citer les ouvertures, les joints perméables, les portes ou fenêtres non parfaitement étanches, les évents de W-C, etc.

Les variations de la pression extérieure se transmettent généralement très rapidement, de façon presque instantanée, dans le volume par les fuites mais surtout par les circuits de ventilation qui sont souvent très perméables vis à vis de ces variations.

Ces variations de la pression sont généralement peu atténuées et peuvent être à l'origine d'une gène physiologique comme c'est le cas pour les trains à grande vitesse.

Les installations concernées, volumes fixes ou véhicules, sont telles qu'il n'est pas envisageable de clore pendant des durées importantes les circuits de ventilation lors des variations de pression externes, un niveau minimum de renouvellement d'air devant être assuré.

De même, il n'est pas possible, pour des raisons technologiques, d'assurer une parfaite étanchéité entre l'intérieur et l'extérieur du volume.

Aussi un but de l'invention est-il un dispositif de régulation de la pression intérieure autour d'un niveau de référence permettant qu'un certain nombre de critères de confort pour l'usager soient respectés.

En pratique, une variation rapide de la pression crée une gêne auditive importante, voire dangereuse, liée à la fois au taux de variation temporel de la pression et à l'écart entre la pression instantanée et la pression de référence.

De façon à assurer le confort pour l'usager, ces deux grandeurs: taux de variation temporel de la pression intérieure et écart entre la pression intérieure instantanée et la pression de référence, doivent rester en deçà de valeurs définies.

Pour des raisons d'hygiène, le taux de renouvellement de l'air doit être optimal et toujours aussi proche que possible du taux de renouvellement d'air nominal.

Aussi un but de l'invention est-il un dispositif de régulation de la pression interne d'un volume clos ventilé soumis à des variations de la pression extérieure permettant de maintenir la pression du volume autour d'une pression de référence de telle sorte que la valeur absolue de l'écart entre la pression intérieure et la pression de référence, et le taux de variation temporel de la pression intérieure restent inférieurs à des seuils fixés par les conditions de confort.

Conformément à l'invention, le dispositif de régulation de la pression interne Pi d'un volume clos ventilé soumis à des variations de la pression extérieure Pe, caractérise par les caractéristiques de la revendication 1.

Le dispositif de régulation selon l'invention est tel que deux circuits de compensation remplacent les circuits de ventilation d'alimentation et d'extraction classiques ou tel qu'un circuit de compensation est associé en parallèle à chacun des circuits de ventilation d'alimentation et d'extraction classiques.

Dans ce dernier cas, la mise en action des circuits de compensation et la fermeture des circuits d'alimentation classiques sont concomitantes.

Le dispositif de régulation de l'invention satisfait également les caractéristiques suivantes:
- lesdits circuits de compensation comportent un ventilateur à caractéristiques spécifiques et un organe de contrôle du débit instantané,
- le dispositif de régulation comporte un système de régulation utilisant le signal issu d'un capteur de pression et destiné à élaborer le signal de commande fourni à des organes de commande pilotant lesdits organes de contrôle des débits instantanés en temps réel,
- le dispositif de régulation comporte un capteur dynamique de pression statique situé dans ledit volume.

Conformément à l'invention, le procédé de régulation de la pression interne Pi d'un volume clos ventilé soumis à des variations de la pression extérieure Pe, est défini par les caractéristiques de la revendication 5. Entre autre :
- lorsque la pression Pi dans un volume passe en dessous d'une pression de référence Pref, un capteur de pression intérieur fournit une information à un système de régulation qui va agir rapidement et de façon mesurée sur la fermeture d'un circuit d'extraction d'air afin de faire chuter le débit correspondant q₂, tandis que le circuit d'alimentation reste ouvert, de manière à ce que la différence entre les débits d'alimentation q₁ et d'extraction q₂ d'air compense algébriquement le débit de fuite q_{f} et maintienne la pression Pi à un niveau constant et voisin de la pression de référence Pref ou de consigne Pc,
- dans le cas où la pression Pi dans le volume passe en dessus de la pression de référence Pref, le système de régulation commande la fermeture partielle et mesurée d'un circuit d'alimentation en air tandis que ledit circuit d'extraction reste ouvert,
- lorsque la pression intérieure Pi instantanée est égale à la pression de référence Pref, les deux circuits d'alimentation et d'extraction restent ouverts.

Le procédé de régulation de l'invention satisfait également à l'une au moins des caractéristiques suivantes:
- la régulation de la pression Pi à l'intérieur du volume autour d'une valeur constante nécessite qu'à chaque instant le débit total d'air entrant dans le volume et le débit total d'air sortant de ce volume, fuites comprises, soient égaux ou voisins et dans lequel lorsque une différence de pression entre l'intérieur Pi et l'extérieur Pe provoque une augmentation de débit dans l'un des circuits de compensation et une diminution dans l'autre, l'égalité des débits entrant et sortant, fuites comprises, est obtenue en réduisant le débit dans le circuit dont le débit augmente sous l'effet de la différence de pression, par fermeture contrôlée de celui-ci, jusqu'à ce que la somme de ce débit et de celui des fuites égale le débit dans l'autre circuit, lequel circuit reste totalement ouvert, son débit tendant à diminuer sous l'effet de la différence de pression, le débit dans ce circuit correspondant au débit de renouvellement d'air du volume,
- lorsque l'amplitude des variations de la pression extérieure dépasse la valeur maximale normale d'utilisation, les deux circuits de compensation sont alors complètement clos de façon à limiter au maximum les variations de la pression intérieure,
- la valeur maximale normale d'utilisation correspond à la pression maximale pouvant être générée par les ventilateurs.

Conformément à l'invention, le procédé de régulation est tel que, lorsque les circuits de compensation ne sont pas en action, les organes de contrôle des débits obturent totalement lesdits circuits, tandis que les clapets sont ouverts, et le renouvellement d'air du volume est assuré par les circuits d'alimentation et d'extraction d'air classiques, et lorsque les circuits de compensation sont en action, les circuits de ventilation classiques sont obturés par des clapets à deux positions.

Le procédé de régulation est tel que la pression intérieure Pi à un instant donné est mémorisée au moyen d'un système permettant de mémoriser, ladite pression mémorisée étant prise alors comme pression intérieure de référence Pref, l'ordre de mémorisation étant soit d'origine extérieure, soit généré par le système de régulation.

Le système de régulation contrôle l'évolution de la pression intérieure Pi vers la pression de référence Pref en respectant un taux de variation fixé par les conditions de confort, dans le cas où un écart apparaît entre les deux pressions Pi et Pref.

Le procédé de régulation est tel que la variation des débits dans les circuits de compensation peut être obtenue par des pompes volumétriques dont la vitesse de rotation est ajustée à tout instant par un système de régulation.

Un avantage du dispositif de régulation de l'invention est qu'il assure le renouvellement en air du volume à un taux qui peut être voisin ou égal au taux nominal.

D'autres buts, caractéristiques et avantages de l'invention apparaîtront à la lecture de la description du mode de réalisation préféré du dispositif de régulation et de ces variantes, description faite en liaison avec les dessins dans lesquels:
- la figure 1 représente le schéma de principe du dispositif de régulation conforme à l'invention,
- les figures 2 et 3 illustrent le fonctionnement, respectivement, en mode permanent ou temporaire des circuits de compensation du dispositif de régulation conforme à l'invention.

La présente invention consiste donc à maintenir la pression Pi dans le volume 1 à un niveau aussi proche que possible de la valeur de référence mémorisée quelle que soit la pression extérieure Pe, compte tenu des fuites 2 et tout en assurant un renouvellement de l'air dans le volume 1.

Le dispositif de régulation de l'invention est autonome au sens où il ne reçoit pas d'informations prévisionnelles quant à une éventuelle variation instantanée de la pression extérieure, de même qu'il agit indépendamment de la façon dont le phénomène physique de variation de la pression extérieure évolue. Son fonctionnement ne dépend que d'informations instantanées relatives à la pression intérieure, complétées éventuellement par des informations sur la pression extérieure, ou encore sur tout phénomène physique lié à ces pressions, par exemple des débits instantanés q₁, q₂.

Le principe général du dispositif de régulation de l'invention consiste à ajuster en temps réel les débits d'alimentation q₁ et d'extraction q₂ d'air de façon à ce que la différence entre les deux compense algébriquement le débit de fuite q_{f} et maintienne ainsi la pression Pi dans le volume 1 à un niveau constant.

La solution selon l'invention permet, comme on le verra par la suite et sous certaines conditions, le renouvellement de l'air à un taux satisfaisant.

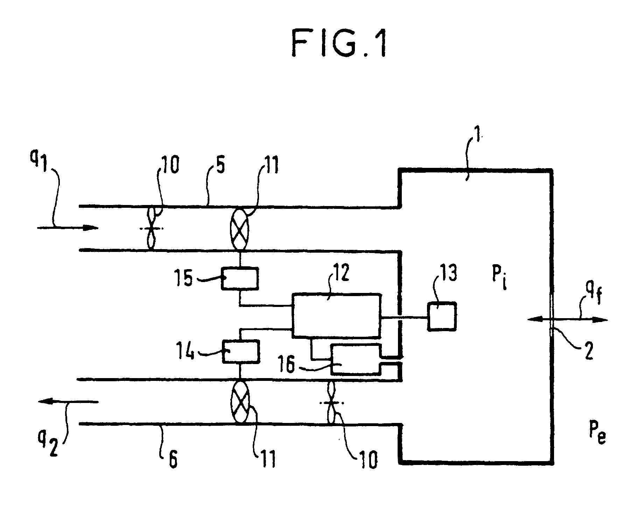

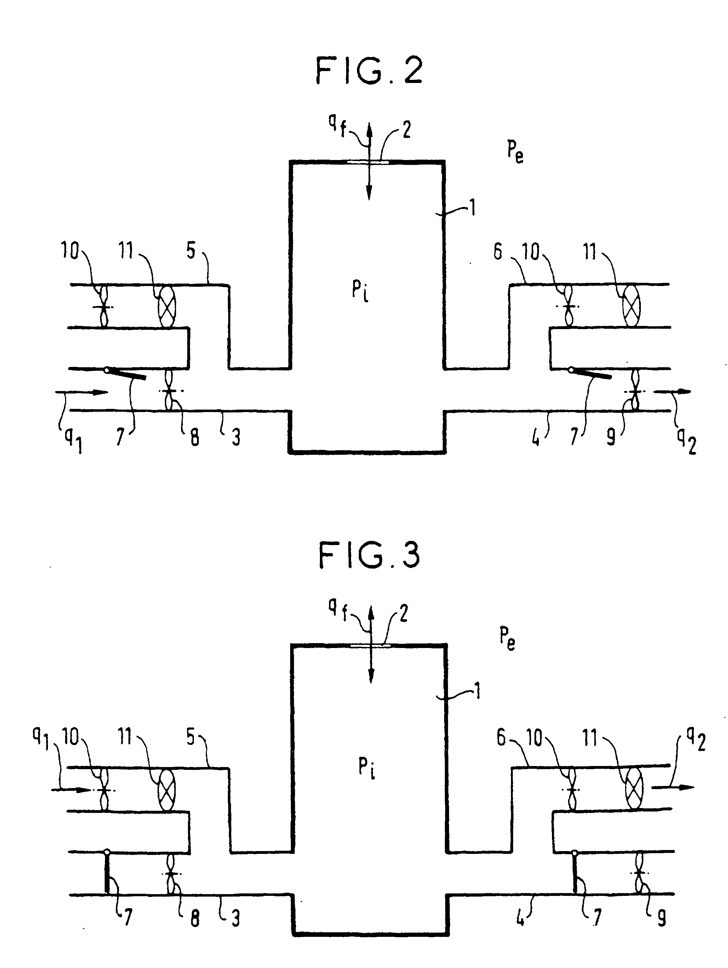

Conformément à un premier mode de réalisation de l'invention, les circuits de ventilation classique, circuits d'alimentation 3 et d'extraction 4 représentés aux figures 2 et 3, sont remplacés par deux circuits de compensation 5,6, tel que représenté à la figure 1.

Conformément à un autre mode de réalisation de l'invention, les circuits de ventilation classique, circuits d'alimentation 3 et d'extraction 4, sont associés en parallèle aux circuits de compensation 5, 6, tel que représenté aux figures 2 et 3.

Les circuits de ventilation classique se composent, par exemple, de clapets à deux positions 7 et d'un ventilateur d'alimentation 8 et d'un ventilateur d'extraction 9, respectivement.

Les circuits de compensation 5, 6 permettent d'assurer un débit de renouvellement de l'air.

Ces circuits de compensation 5, 6 sont équipés notamment de ventilateurs à caractéristiques spécifiques 10 et d'un organe de contrôle 11 des débits instantanés, par exemple par modification instantanée de la géométrie du circuit, au moyen de vannes.

Le dispositif de contrôle proprement dit est constitué d'au moins quatre éléments qui sont:
- un système de mémorisation 16 de la valeur de la pression intérieure choisie comme pression de référence,
- un système de mesure de pression 13 permettant la mesure de la pression intérieure et la détection des variations de pression,
- un système de régulation 12 utilisant le signal issu d'un capteur de pression 13 et destiné à élaborer le signal de commande fourni à des organes de commande 14, 15 pilotant lesdits organes de contrôle 11 des débits instantanés en temps réel,
- les deux organes de commande 14, 15, par exemple des actionneurs, sont régulés en position et pilotés par le signal de commande fourni par le système de régulation 12.

Le dispositif comporte donc un capteur dynamique 13 de pression statique situé dans le volume 1 de manière à fournir un signal instantané au système de régulation 12.

Compte tenu de l'évolution de la pression intérieure par rapport à la pression de référence Pref, le système de régulation 12 élabore la commande qui est fournie aux organes de commande 14, 15, permettant la régulation des débits dans les circuits 5, 6.

La mesure de la pression Pi dans le volume est indispensable et on peut également, pour augmenter la rapidité de la compensation, adjoindre un capteur extérieur qui permettra aux organes de commande 14, 15 d'anticiper leur action vis à vis des perturbations dues aux variations de la pression extérieure Pe.

Lorsque la pression Pi dans le volume 1 passe en dessous de la pression de référence Pref, le capteur de pression 13 intérieur fournit une information au système de régulation 12, à laquelle peut éventuellement s'ajouter une autre information, qui va agir rapidement et de façon mesurée sur la fermeture du circuit d'extraction 6 d'air afin de faire chuter le débit correspondant q₂.

La différence entre les débits d'alimentation q₁ et d'extraction q₂ d'air va ainsi compenser algébriquement le débit de fuite q_{f} et maintenir de cette façon la pression Pi à un niveau constant et voisin de la pression de référence Pref ou de consigne Pc.

Dans le cas où la pression Pi dans le volume 1 passe au dessus de la pression de référence Pref, le système de régulation 12 commande la fermeture partielle et mesurée du circuit d'alimentation 5 en air tandis que le circuit d'extraction 6 reste ouvert.

Lorsque la pression intérieure Pi instantanée est égale à la pression de référence Pref, les deux circuits d'alimentation 5 et d'extraction 6 restent ouverts.

La régulation de la pression Pi à l'intérieur du volume 1 autour d'une valeur constante nécessite qu'à chaque instant le débit total d'air entrant dans le volume et le débit total d'air sortant de ce volume, fuites comprises, soient égaux ou voisins.

Une différence de pression entre l'intérieur Pi et l'extérieur Pe provoque une augmentation de débit dans l'un des circuits de compensation 5, 6 et une diminution dans l'autre 6, 5, ainsi qu'un débit de fuite q_{f}.

L'égalité des débits entrant et sortant, y compris les fuites, est obtenue en réduisant le débit dans le circuit dont le débit augmente sous l'effet de la différence de pression, par fermeture contrôlée de celui-ci, jusqu'à ce que la somme de ce débit et de celui des fuites égale le débit dans l'autre circuit.

Ce dernier circuit reste totalement ouvert et son débit tend à diminuer sous l'effet de la différence de pression, la valeur de la variation de débit étant fonction de la caractéristique débit-pression du ventilateur à caractéristiques spécifiques 10.

Le débit dans le circuit resté totalement ouvert correspond au débit de renouvellement d'air du volume.

Dans la mesure où la caractéristique débit-pression des ventilateurs utilisés est telle que le débit qu'ils génèrent dépend peu des conditions de pression amont et aval d'une part, que l'importance des fuites du volume et des variations de pression extérieure restent en deçà des valeurs admissibles par les ventilateurs d'autre part, le débit dans le circuit resté totalement ouvert diminue peu.

D'autre part, la réduction du débit dans le circuit contrôlé est faible.

Ainsi, le renouvellement de l'air dans le volume reste toujours proche de son taux nominal.

Inversement, si les caractéristiques des ventilateurs sont telles que, dans le circuit resté ouvert, le débit d'air diminue de façon importante, en particulier lors des variations maximales de la pression extérieure, le débit de renouvellement d'air sera diminué d'autant.

Si, exceptionnellement l'amplitude des variations de la pression extérieure atteint ou dépasse la valeur maximale normale d'utilisation, c'est à dire la pression maximum pouvant être générée par les ventilateurs, les deux circuits de compensation sont alors complètement clos de façon à limiter au maximum les variations de la pression intérieure.

Chaque circuit de compensation comprend un ventilateur dont le point de fonctionnement (débit nominal) est fixé par la perte de charge du débit associé.

Chacun de ces circuits est muni d'un organe de régulation de débit (vanne, volet,...) qui est entraîné par un actionneur (vérin pneumatique, moteur électrique...) dont la position est régulée. L'un de ces circuits est destiné à l'alimentation en air tandis que l'autre est destiné à son extraction.

Le dispositif de régulation de la pression dans le volume, qui peut être numérique où analogique, établit un signal de commande pour ces actionneurs sur la base du (ou des) signal(aux) de pression fourni par le capteur de pression situé dans le volume et par les éventuels capteurs additionnels.

D'autre part, l'invention inclut un système mécanique ou électrique permettant de mémoriser la pression de référence.

Ce système consiste, par exemple, en un volume étanche en contact permanent avec la référence du capteur de pression relatif intérieur.

Ce volume est ponctuellement mis en contact avec la pression extérieure par l'intermédiaire d'une électrovalve pour mémoriser la pression, par exemple à l'entrée des tunnels.

Le dispositif de régulation peut, soit être installé parallèlement aux circuits de ventilation classique, soit assurer lui-même la fonction de ces circuits de ventilation classique.

Plusieurs variantes de l'invention sont possibles, la description qui suit porte sur ces variantes.

Concernant l'implantation des capteurs:

La version de base du dispositif ne comprend qu'un seul capteur de pression situé dans le volume dont la présence est indispensable puisqu'il mesure la grandeur à réguler.

Il est néanmoins possible d'ajouter des capteurs supplémentaires tels qu'un capteur mesurant la pression extérieure.

Cette mesure délivre un signal qui, utilisé par le système de régulation peut permettre d'augmenter les performances du dispositif en anticipant sur l'action des organes de régulation de débit. Notons également que le signal utilisé par le système de régulation peut être obtenu à partir de la mesure instantanée de toute grandeur physique liée aux variations de pression extérieure (débit instantané ou vitesse instantanée de l'air dans les circuits...).

Concernant le fonctionnement des circuits de compensation:

Les circuits de compensation peuvent être en fonctionnement permanent ou temporaire.

Si les variations de pression extérieures apparaissent de façon occasionnelles, il sera préférable de commuter les circuits de compensation temporairement sur les circuits existants comme le montrent les figures 2 et 3.

Un avantage de cette variante est une économie d'énergie en alimentant les circuits de compensation uniquement pendant les périodes où des variations de pression peuvent apparaître.

Deux vannes à deux positions permettent d'effectuer la commutation.

Concernant les organes de régulation de débit:

La régulation des débits dans les circuits de compensation nécessite à priori deux vannes distinctes.

Cependant, dans la mesure où le contrôle doit être effectué alternativement dans l'un ou l'autre des circuits (au moins un des deux circuits est ouvert), il est possible d'utiliser une seule vanne à deux voies.

Une telle vanne à deux voies est réalisée, par exemple, à partir d'un cylindre muni de lumières décalées en rotation dans une coque, ou avec deux plans munis de lumières en translation l'un par rapport à l'autre (système à guillotine), ou encore à l'aide d'une pièce de section variable en translation dans un (ou des) orifice(s) de section constante.

S'il paraît difficile pour des raisons technologiques de réunir les deux circuits à proximité ou de réaliser une telle vanne, il est toujours possible d'appliquer la consigne alternativement sur l'un ou l'autre des actionneurs ou qu'ils obéissent à des signaux de signes opposés.

D'autre part, pour assurer la stabilité du système de régulation de la pression, il est bénéfique de retenir des vannes telles que l'évolution de la perte de charge qu'elles occasionnent en fonction de leur position soit la plus linéaire possible, les évolutions relatives aux vannes classiques étant souvent du type exponentielle et conduisant à des sollicitations importantes des actionneurs qui les pilotent et à une diminution des performances du système.

Concernant l'agencement des moto ventilateurs:

Afin de limiter le volume occupé par les ventilateurs, une variante consiste à entraîner les deux ventilateurs par un seul moteur en les fixant sur chaque extrémité de l'arbre du moteur.

Concernant la régulation du taux de variation temporel de pression:

Si la pression extérieure change entre le moment où débute la régulation et le moment où elle doit se terminer (par exemple du fait d'une dénivellation subie par un véhicule en tunnel), il est possible de gérer l'arrêt du système en effectuant un glissement de la pression de consigne de façon à contrôler le taux de variation temporel de la pression dans le volume.

Concernant la variation du débit dans les circuits:

Un autre moyen d'obtenir la variation des débits d'air d'alimentation ou d'extraction consiste à agir sur la vitesse de rotation des moto ventilateurs en modifiant l'alimentation électrique des moteurs, par exemple par une alimentation en courant alternatif à tension et fréquence variables.

Concernant la production des débits d'air:

Les débits d'air peuvent être assurés par des pompes ou compresseurs volumétriques. La modulation du débit avec ce type d'appareil n'est possible en pratique qu'en agissant sur la vitesse de rotation.

Concernant la commande de mise en service ou d'arrêt:

La mise en action ou l'arrêt du système de contrôle de pression intérieure est, dans le cas le plus simple, commandée par un signal extérieur.

En variante, le système peut être autonome, c'est à dire que la mémorisation de la pression de référence et la mise en action du système sont commandées par la détection d'une variation de pression intérieure ou extérieure, et élaborées à partir du traitement du signal du ou des capteurs de pression.

L'arrêt du système peut être commandé par la détection de l'absence de variations de pression extérieure et intérieure, ou encore par tout autre critère fiable.

Le dispositif de régulation de la pression de l'invention peut comprendre un système de mémorisation de la pression intérieure à un instant donné, pression prise alors comme pression de référence.

Le dispositif de régulation de la pression de l'invention peut également permettre à la pression intérieure de se rééquilibrer avec la pression extérieure dans le cas d'un changement d'altitude, en respectant un taux de variation temporel fixé par les conditions de confort.

Le dispositif de régulation de la pression interne Pi d'un volume clos ventilé soumis à des variations de la pression extérieure Pe de l'invention, est particulièrement adapté au matériel ferroviaire traversant des tunnels ou passant à proximité d'obstacles.

La mise en service et l'arrêt du dispositif de régulation de l'invention peut être commandé par des installations fixes délivrant les informations d'entrée et de sortie des tunnels.

La régulation de la pression intérieure des voitures est réalisée pendant toute la durée des tunnels par rapport à la pression de consigne mémorisée à l'entrée des tunnels.

Cette solution a pour avantage de ne nécessiter qu'un seul capteur de pression situé dans le volume de la voiture.

Si du fait d'une dénivellation, la pression extérieure est différente de la pression intérieure, il est possible de gérer l'arrêt du système en réalisant un glissement de consigne de façon contrôlé de façon à limiter le taux de variation temporel de la pression dans la voiture.

En complément de ce qui précède, le procédé de régulation selon l'invention est tel que, lorsque les circuits de compensation (5, 6) ne sont pas en action, les organes de contrôle des débits (11) obturent totalement les circuits, tandis que les clapets (7) sont ouverts, et le renouvellement d'air du volume (1) est assuré par les circuits d'alimentation (3) et d'extraction (4) d'air classiques, et lorsque les circuits de compensation (5, 6) sont en action, les circuits de ventilation (3, 4) classiques sont obturés par des clapets à deux positions (7).

De préférence, la pression intérieure Pi à un instant donné est mémorisée au moyen d'un système permettant de mémoriser, la pression mémorisée étant prise alors comme pression intérieure de référence Pref, l'ordre de mémorisation étant soit d'origine extérieure, soit généré par le système de régulation (12).

Le système de régulation (12) contrôle l'évolution de la pression intérieure Pi vers la pression de référence Pref en respectant un taux de variation fixé par les conditions de confort, dans le cas où un écart apparaît entre les deux pressions Pi et Pref.

Le procédé de régulation selon l'invention est tel que la variation des débits dans les circuits de compensation peut être obtenue par des pompes volumétriques dont la vitesse de rotation est ajustée à tout instant par un système de régulation (12).

Le débit des pompes volumétriques étant pratiquement insensible à la différence de pression entre l'intérieur Pi et l'extérieur Pe, la différence des débits entre la pompe d'alimentation et la pompe d'extraction d'air doit seulement compenser algébriquement le débit des fuites qf.

## Revendications

1. Dispositif de régulation de la pression interne Pi d'un volume (1) clos ventilé soumis à des variations de la pression extérieure Pe et susceptible de comporter des fuites provoquant un débit de fuite q_{f} assurant un échange d'air supplémentaire entre le volume (1) et l'extérieur, **caractérisé en ce qu'**il comporte :
- un capteur (13) de mesure de la pression interne Pᵢ, ledit volume (1) étant équipé de ce capteur (13);
- un systeme de regulation (12);
- un système de mémorisation (16) qui mémorise la valeur de la pression intérieure Pi à un instant donné par un ordre de mémorisation qui est soit d'origine extérieure, soit généré par le système de régulation (12), cette pression mémorisée à cet instant donné étant choisie comme pression de référence Pref;
- au moins deux circuits de compensation (5, 6) comportant chacun un ventilateur et un organe de contrôle (11) du débit instantané disposés en série, les deux circuits de compensation (5,6) permettant respectivement d'ajuster en temps réel un débit d'alimentation d'air q₁ et un débit d'extraction d'air q₂ dans ledit volume (1) clos;
- le système de régulation (12) utilisant le signal issu du capteur de pression (13) pour élaborer le signal de commande fourni à des organes de commande (14,15) pilotant lesdits organe de contrôle (11) des débits instantanés en temps réel de manière à ce que la différence entre le débit d'alimentation q₁ et le débit d'extraction q₂ compense algébriquement le débit de fuite q_{f} et maintienne la pression interne Pi dans 1e volume (1) à un niveau constant voisin de la pression de référence Pref.

2. Dispositif de régulation selon la revendication 1, **caractérisé en ce que** les deux circuits de compensation (5, 6) remplacent les circuits d'alimentation (3) et d'extraction (4) classiques.

3. Dispositif de régulation selon la revendication 1, **caractérisé en ce qu'**un circuit de compensation (5, 6) est associé en parallèle à chacun des circuits de ventilation d'alimentation (3) et d'extraction (4) classiques.

4. Dispositif de régulation selon la revendication 3, **caractérisé en ce que** la mise en action des circuits de compensation et la fermeture des circuits d'alimentation sont concomitantes.

5. Procédé de régulation de la pression interne Pi d'un volume (1) clos ventilé soumis à des variations de la pression extérieure Pe, **caractérisé en ce qu'**il comporte les étapes suivantes:
- mémorisation, à un instant donné, de la pression intérieure Pi au moyen d'un système de mémorisation (16), ladite pression mémorisée à cet instant donné étant prise alors comme pression intérieure de référence Pref, l'ordre de mémorisation étant soit d'origine extérieure, soit généré par un système de régulation (12) ;
- lorsque la pression Pi dans le volume (1) passe en dessous de la pression de référence Pref, un capteur de pression (13) intérieur fournit une information à un système de régulation (12) qui va agir rapidement et de façon mesurée sur la fermeture d'un circuit d'extraction (6) d'air afin de faire chuter le débit correspondant q2, tandis que le circuit d'alimentation. (5) reste ouvert, de manière à ce que la différence entre les débits d'alimentation q1 et d'extraction q2 d'air compense algébriquement le débit de fuite qf et maintienne la pression Pi à un niveau constant et voisin de la pression de référence Pref,
- dans le cas où la pression Pi dans le volume (1) passe en dessus de la pression de référence Pref, le système de régulation (12) commande la fermeture partielle et mesurée d'un circuit d'alimentation (5) en air tandis que ledit circuit d'extraction (6) reste ouvert,
- lorsque la pression intérieure Pi instantanée est égale à la pression de référence Pref, les deux circuits d'alimentation (5) et d'extraction (6) restent ouverts.

6. Procédé de régulation selon la revendication 5, **caractérisé en ce que** les ordres de mémorisation de la pression intérieur Pi comme pression intérieur de référence Pref sont donnés par un signal extérieur délivré par des installations fixes.

7. Procédé de régulation selon l'une quelconque des revendications 5 à 6, **caractérisé en ce que** lorsque l'amplitude des variations de la pression extérieure dépasse la valeur maximale normale d'utilisation, les deux circuits de compensation sont alors complètement clos de façon à limiter au maximum les variations de la pression intérieure.

8. Procédé de régulation selon l'une quelconque des revendications 5 à 7, **caractérisé en ce que** lorsque les circuits de compensation (5, 6) ne sont pas en action, les organes de contrôle des débits (11) obturent totalement lesdits circuits, tandis que les clapets(7) sont ouverts, et le renouvellement d'air du volume (1) est assuré par les circuits d'alimentation (3) et d'extraction (4) d'air classiques, et lorsque les circuits de compensation (5, 6) sont en action, les circuits de ventilation (3, 4) classiques sont obturés par des clapets à deux positions (7).

9. Procédé de régulation suivant selon la revendication 5, **caractérisé en ce que** le système de régulation (12) contrôle l'évolution de la pression intérieure Pi vers la pression de référence Pref en respectant un taux de variation fixé par les conditions de confort, dans le cas où un écart apparaît entre les deux pressions Pi et Pref.

10. Procédé de régulation suivant l'une quelconque des revendications 5 à 9, **caractérisé en ce que** la variation des débits dans les circuits de compensation peut être obtenue par des pompes volumétriques dont la vitesse de rotation est ajustée à tout instant par un système de régulation (12).

## Patentansprüche

1. Vorrichtung zur Regelung des Innendrucks Pi eines geschlossenen, belüfteten Volumens (1), das Schwankungen des Außendrucks Pe unterworfen ist und Lecks aufweisen kann, die einen Leckdurchsatz qᵣ bewirken, der einen zusätzlichen Luftaustausch zwischen dem Volumen (1) und dem Äußeren gewährleistet, **dadurch gekennzeichnet, dass** sie umfässt:
- einen Aufnehmer (13) zur Messung des Innendrucks Pi. wobei das Volumen (1) mit diesem Aufnehmer (13) ausgerüstet ist;
- ein Regelungssystem (12);
- ein Speicherungssystem (16), das den Wert des Innendrucks Pi in einem gegebenen Moment durch einen Speicherbefehl, der entweder von äußerer Herkunft ist oder durch das Regelungssystem (12) erzeugt wird, speichert. wobei der gespeicherte Druck in diesem Moment als Bezugsdruck Pref gewählt wird;
- wenigstens zwei Ausgleichskreise (5, 6) mit jeweils einem Ventilator und einem Kontrollorgan (11) des Momentandurchsatzes, die in Reihe angeordnet sind, wobei die beiden Ausgleichskreise (5. 6) jeweils ermöglichen in Echtzeit einen Luftspeisungsdurchsatz q₁ und Luftabzugsdurchsatz q₂ in dem geschlossenen Volumen (1) einzustellen;
- das Regelungssystem (12) nutzt das vom Druckaufnehmer (13) stammende Signal um das Steuersignal zu erstellen, das Steuerorganen (14. 15) zugeführt wird, welche die Kontrollorgane (11) der Momentandurchsätze in Echtzeit steuern, derart, dass der Umerschied zwischen dem Speisungsdurchsatz q₁ und dem Abzugsdurchsatz q₂ den Leckdurchsatz q_{f} rechnerisch ausgleicht und den Innendruck Pi in dem Volumen (1) auf einer konstanten Höhe nahe dem Bezugsdruck Pref hält.

2. Regelungsvorrichtung nach Anspruch 1, d**adurch gekennzeichnet, dass** die beiden Ausgleichskreise (5, 6) die herkömmlichen Kreise zur Speisung (3) und zum Abzug (4) ersetzen.

3. Regelungsvorrichtung nach Anspruch 1, **dadurch gekennzeichnet, dass** ein Ausgleichskreis (5, 6) mit jedem der herkömmlichen Belüfrungskreise zur Speisung (3) und zum Abzug (4) parallel verbunden ist.

4. Regelungsvorrichtung nach Anspruch 3, **dadurch gekennzeichnet, dass** die Betätigung der Ausgleichskreise und das Verschließen der Speisungskreise gleichzeitig erfolgt.

5. Verfahren zur Regelung des Innendrucks Pi eines geschlossenen, belüfteten Volumens (1), das Schwankungen des Außendrucks Pe unterworfen ist. **dadurch gekennzeichnet, dass** es die folgenden Schritte umfasst:
- Speicherung in einem gegebenen Moment des Innendrucks Pi mittels eines Speichersystems (16), wobei der in diesem gegebenen Moment gespeicherte Druck als Bezugsinnendruck Pref genommen wird, der Speicherbefehl entweder von äußerer Herkunft ist oder durch ein Regelungssystem (12) erzeugt wird;
- wenn der Druck Pi in dem Volumen (1) unter den Bezugsdruck Pref fällt, führt ein Innendruckaufnehmer (13) einem Regelungssystem (12) eine Information zu, welches schnell und in bemessener Weise auf den Verschluss eines Abzugskreises (6) wirkt, um den zugehörigen Durchsatz. q₂ abfallen zu lassen, während der Speisungskreis (5) offen bleibt, so dass der Unterschied zwischen den Durchsätzen zur Speisung q₁ und zum Abzug q₂ von Luft den Leckdurchsatz q_{f} rechnerisch ausgleicht, und den Druck Pi auf einer konstanten Höhe und nahe dem Bezugsdruck Pref hält.
- in dem Fall, wo der Druck Pi in dem Volumen (1) den Bezugsdruck Pref übersteigt, steuert das Regelungssystem (12) das teilweise und bemessene Verschließen eines Lufspeisungskreises (5), während der Abzugskreis (6) offen bleibt,
- wenn der Momentaninnendruck Pi dem Bezugsdruck Pref gleich ist, bleiben die beiden Kreise zur Speisung (5) und zum Abzug (6) offen.

6. Regelungsverfahren nach Anspruch 5, **dadurch gekennzeichnet, dass** die Befehle zur Speicherung des Innendrucks Pi als Bezugsinnendruck Pref durch ein äußeres Signal erfolgen, das von festen Einrichtungen geliefert wird.

7. Regelungsverfahren nach einem der Ansprüche 5 bis 6, **dadurch gekennzeichnet, dass** wenn die Amplitude der Schwankungen des Außendrucks den normalen Gebrauchstnaximalwert übersteigt, die beiden Ausgleichskreise vollständig geschlossen werden, um die Schwankungen des Innendrucks im Maximum zu begrenzen.

8. Regelungsverfahren nach einem der Ansprüche 5 bis 7, **dadurch gekennzeichnet dass** wenn die Ausgleichskreise (5, 6) nicht tätig sind, die Kontrollorgane der Durchsätze (11) die Kreise vollständig verschließen, während die Klappen (7) offen sind, und die Lufterneuerung des Volumens (1) durch die herkömmlichen Kreise zur Speisung (3) und zum Abzug (4) von Luft sichergestellt wird, und dass, wenn die Ausgleichskreise (5,6) tätig sind, die herkömmlichen Belüftungskreise (3. 4) durch die Klappen mit zwei Positionen (7) verschlossen werden.

9. Regelungsverfahren nach Anspruch 5, **dadurch gekennzeichnet, dass** das Regelungssystem (12) in dem Fall, wo ein Abstand zwischen den beiden Drücken Pi und Pref auftritt, den Verlauf des Innendrucks Pi gegenüber dem Bezugsdruck Pref unter Berücksichtigung eines durch die Bedingungen für die Bequemlichkeit festgelegten Schwankungsgrads kontrolliert.

10. Regelungsverfahren nach einem der Ansprüche 5 bis 9, **dadurch gekennzeichnet, dass** die Änderung der Durchsätze in den Ausgleichskreisen durch Verdrängerpumpen erhalten werden kann, deren Drehgeschwindigkeit in jedem Moment durch ein Regelungssystem (12) eingestellt wird.

## Claims

1. Regulating apparatus for regulating the internal pressure Pᵢ of a ventilated, closed volume (1) subjected to variations in external pressure Pₑ and liable to include leaks causing a leakage flow rate q_{f} ensuring additional air exchange between the volume (1) and the outside, said apparatus being **characterized in that** it comprises:
a sensor (13) for measuring the internal pressure Pᵢ, said volume (1) being fitted with said sensor (13);
a regulating system (12);
a storage system (16) which memorizes the value of the internal pressure Pᵢ at a given instant by means of a storage command which is either of external origin, or is generated by the regulating system (12), the pressure stored at said given instant being selected as reference pressure P_{ref}; and
at least two compensation circuits (5, 6) each including, in series, a fan and a control member (11) for controlling the instantaneous flow rate, the two compensation circuits (5, 6) respectively enabling an intake air flow rate q₁ and an extraction air flow rate q₂ to be adjusted in real time inside said closed volume (1),
the regulating system (12) using the signal output by the pressure sensor (13) to generate the actuation signals supplied to actuator members (14, 15) driving said control members (11) for controlling the instantaneous flow rates in real time so that the difference between the intake flow rate q₁ and the extraction flow rate q₂ algebraically compensates for the leakage flow rate q_{f}, and maintains the internal pressure Pᵢ inside the volume (1) at a constant level close to the reference pressure P_{ref}.

2. Regulating apparatus according to claim 1, **characterized in that** the two compensation circuits (5, 6) replace the conventional circuits, namely the intake circuit (3) and the extraction circuit (4).

3. Regulating apparatus according to claim 1, **characterized in that** a compensation circuit (5, 6) is associated in parallel with each of the conventional ventilation circuits, i.e. with the intake circuit (3) and with the extraction circuit (4).

4. Regulating apparatus according to claim 3, **characterized in that** the compensation circuits are activated and the ventilation circuits are closed off concomitantly.

5. A method of regulating the internal pressure Pᵢ of a ventilated, closed volume (1) subjected to variations in external pressure Pₑ, said method being **characterized in that** it includes the following steps:
storing, at a given instant, the internal pressure Pᵢ by means of a storage system (16), the stored pressure at said given instant then being taken as the reference internal pressure P_{ref}, the storage command either being of external origin, or being generated by a regulating system (12);
when the pressure Pᵢ inside the volume (1) drops below the reference pressure P_{ref}. an internal pressure sensor (13) supplies information to a regulating system (12) which then acts rapidly and smoothly to close an air extraction circuit (6) to some extent so as to cause the corresponding flow rate q₂ to drop, while the intake circuit (5) remains open, so that the difference between the intake air flow rate q₁ and the extraction air flow rate q₂ algebraically compensates for the leakage flow rate q_{f}, and maintains the pressure Pᵢ at a level that is constant and that is close to the reference pressure P_{ref};
when the pressure Pᵢ inside the volume (1) rises above the reference pressure P_{ref}, the regulating system (12) causes an air intake circuit (5) to be closed partially and smoothly, while the extraction circuit (6) remains open; and
when the instantaneous internal pressure Pᵢ is equal to the reference pressure P_{ref}, both the intake circuit (5) and the extraction circuit (6) remain open.

6. A regulating method according to claim 5, **characterized in that** the storage commands of the internal pressure Pᵢ as reference internal pressure P_{ref} are given by an external signal delivered via fixed installations.

7. A regulating method according to claim 5 or 6, **characterized in that**, when the amplitude of the variations in external pressure exceeds the maximum value for normal use, both compensation circuits are then completely closed so as to limit the variations in the internal pressure to as small as possible.

8. A regulating method according to any one of claims 5 to 7, **characterized in that**, when the compensation circuits (5, 6) are not in action, the flow rate control members (11) shut off said circuits completely, while the valves (7) are open, and the air in the volume (1) is renewed via the conventional air intake circuit (3) and air extraction circuit (4), and when the compensation circuits (5, 6) are in action, the conventional ventilation circuits (3, 4) are shut off by two-position valves (7).

9. A regulating method according to claim 5, **characterized in that** the regulating system controls the change in the internal pressure Pᵢ towards the reference pressure P_{ref} by complying with a rate of variation dictated by conditions of comfort, when a difference appears between the two pressures Pᵢ and P_{ref}.

10. A regulating method according to any one of claims 5 to 9, **characterized in that** the flow rates in the compensation circuits can be varied by positive displacement pumps whose speeds of rotation are adjusted continuously by a regulating system (12).
